# DEMANDE DE BREVET EUROPEEN

(11) **EP 0 764 789 A1**
(43) Date de publication de la demande: **26.03.1997**
(21) Numéro de dépôt: 96402001.0
(22) Date de dépôt: 20.09.1996
(51) Int. Cl.: F16B 37/08, B62D 43/10

(54) **Ecrou à serrage rapide**

(30) Priorité: 21.09.1995 FR 9511116
(71) Demandeur: Renault, 92109 Boulogne Billancourt (FR)
(72) Inventeur: Flores, Roger Luis, 92350 Le Plessis Robinson (FR)

(57) **Abrégé**

L'invention concerne un écrou à serrage rapide, notamment pour la fixation d'une roue de secours (10) de véhicule automobile, du type dans lequel l'écrou (14) présente un premier état dans lequel il est susceptible de glisser librement sur une tige filetée (16), et un second état dans lequel l'écrou (14) est en prise sur la tige filetée (16), caractérisé en ce que l'écrou (14) comporte une bague fendue (40) déformable qui est munie sur une face cylindrique interne (42) d'un taraudage, en ce que la bague (40) à l'état libre est d'un diamètre supérieur au diamètre de la tige filetée (16), et en ce qu'il est prévu des moyens pour resserrer radialement la bague fendue (40) de manière à provoquer la coopération du taraudage de l'écrou (14) avec le filetage de la tige filetée (16).

## Description

L'invention concerne un écrou à serrage rapide.

L'invention concerne plus particulièrement un écrou à serrage rapide, notamment pour la fixation d'une roue de secours de véhicule automobile, du type dans lequel l'écrou présente un premier état dans lequel il est susceptible de glisser librement sur une tige filetée, et un second état dans lequel l'écrou est en prise sur la tige filetée.

Les écrous à serrage rapide permettent d'éviter d'avoir à visser l'écrou sur toute la longueur de la tige fileté, ce qui, dans certains cas, peut s'avérer long et fastidieux lorsque la tige filetée est d'une grande longueur.

On connaît des systèmes d'écrou à serrage rapide dans lesquels le taraudage est réalisé perpendiculairement au plan général de l'écrou et dans lesquels il est prévu un alésage lisse de diamètre supérieur au taraudage et dont l'axe est incliné par rapport à l'axe du perçage taraudé.

L'axe du perçage et l'axe de l'alésage lisse sont concourants sensiblement au milieu de l'écrou.

De la sorte, lorsque l'écrou est introduit sur la tige filetée avec un angle correspondant à l'angle d'inclinaison de l'alésage lisse, les filets de l'écrou ne peuvent coopérer avec ceux de la tige filetée et l'écrou peut coulisser librement sur la tige.

Lorsque l'écrou arrive en butée contre un objet à serrer, il est alors nécessaire de le redresser pour faire coïncider l'axe du taraudage de l'écrou avec celui de la tige filetée de manière à engager les filets de l'écrou avec ceux de la tige filetée et de pouvoir ainsi exercer une force de serrage.

Toutefois, dans ce type d'écrou, le taraudage de l'écrou n'est réalisé que sur une portion de surface cylindrique inférieure à la moitié d'une surface cylindrique complète du fait de l'intersection avec l'alésage lisse, et, au niveau de point de concours des axes du taraudage et de l'alésage lisse, la profondeur des filets est très faible.

De la sorte, on obtient une surface utile de contact des filets de l'écrou avec ceux de la tige filetée qui est très faible, et qui présente en outre l'inconvénient d'être dissymétrique.

L'invention a donc pour but de proposer un écrou à serrage rapide dont les filets actifs sont répartis symétriquement autour de l'axe de la tige filetée et dont le nombre de filets actifs est suffisamment important pour résister à des efforts de serrage importants.

Dans ce but, l'invention propose un écrou à serrage rapide du type vu précédemment, caractérisé en ce que l'écrou comporte une bague fendue déformable qui est munie sur une face cylindrique interne d'un taraudage, en ce que la bague à l'état libre est d'un diamètre supérieur au diamètre de la tige filetée, et en ce qu'il est prévu des moyens pour resserrer radialement la bague fendue de manière à provoquer la coopération du taraudage de l'écrou avec le filetage de la tige filetée.

Selon d'autres caractéristiques de l'invention :
- la bague fendue comporte une surface externe conique destinée à coopérer avec une surface de commande pour provoquer le serrage radial de la bague ;
- la surface de commande est formée sur la jante de la roue à fixer et la surface externe conique est une surface d'appui de l'écrou sur la roue ;
- la surface de commande est agencée sur une face d'appui interposée entre l'écrou et la roue et la surface externe conique est une surface d'appui de l'écrou sur la face d'appui ;
- l'écrou comporte une couronne de préhension pour son entraînement en rotation qui est agencée à une extrémité axiale opposée à l'extrémité axiale portant la bague fendue ;
- la bague fendue est agencée à l'extrémité axiale inférieure d'un tube d'écrou autour duquel est susceptible de coulisser axialement un fourreau tubulaire dont l'extrémité axiale inférieure porte la surface de commande, et le fourreau est susceptible de se déplacer entre une position retirée de déverrouillage dans laquelle la bague fendue est libre et une position engagée de verrouillage dans laquelle la bague fendue est reçue à l'intérieur de l'extrémité inférieure du fourreau et dans laquelle la bague est resserrée sur la tige filetée ;
- l'écrou comporte une couronne d'entraînement en rotation du tube d'écrou qui est montée mobile axialement à l'extrémité supérieure du tube et la couronne d'entraînement commande les déplacement axiaux du fourreau tubulaire ;
- le tube d'écrou comporte à son extrémité axiale supérieure un collet radial dont une surface radiale inférieure forme une surface d'appui de l'écrou ;
- le collet radial du tube d'écrou comporte dans une face supérieure une série de logements agencés radialement, répartis angulairement de manière régulière, et qui guident axialement des ergots de forme complémentaire formés sur la couronne d'entraînement, et les ergots et les logements coopèrent pour l'accouplement en rotation du tube d'écrou et de la couronne d'entraînement ;
- le fourreau tubulaire comporte, à une extrémité axiale supérieure, des doigts axiaux qui traversent librement le collet radial du tube d'écrou par des passages axiaux et qui sont fixés par emboîtement élastique dans la couronne d'entraînement afin d'assurer l'accouplement axial du fourreau et de la couronne ;
- les passages axiaux du collet radial du tube d'écrou débouchent dans les logements de la face supérieure et les doigts radiaux sont emboîtés élastiquement dans des orifices formés dans les ergots de la couronne d'entraînement.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale d'un dispositif de fixation d'une roue de secours de véhicule automobile muni d'un écrou à serrage rapide conforme aux enseignements de l'invention ;
- la figure 2 est une vue en perspective éclatée d'un tel écrou ;
- la figure 3 est une vue en perspective d'un tel écrou assemblé ;
- la figure 4 est une vue partielle en perspective avec arrachement du montage de la couronne d'entraînement sur le fourreau tubulaire ;
- les figures 5 et 6 sont des vues en coupe axiale d'un tel écrou monté sur une tige filetée, illustré respectivement en position libre et en position engagée des filets ;
- la figure 7 est une vue en perspective avec arrachement d'un deuxième mode de réalisation d'un écrou à serrage rapide conforme aux enseignements de l'invention ;
- les figures 8 et 9 sont des vues en coupe axiale du second mode de réalisation d'un écrou monté sur une tige filetée, illustré respectivement en position libre et en position engagée des filets.

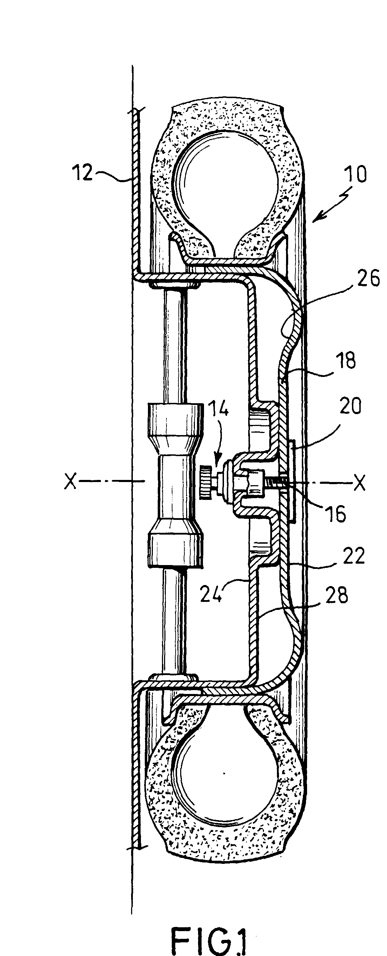

On a représenté sur la figure 1 un dispositif de fixation d'une roue de secours de véhicule automobile, muni d'un écrou à serrage rapide conforme aux enseignements de l'invention.

Dans l'exemple de réalisation qui est décrit ci-après, la roue de secours 10 est montée sur un support 12 qui est destiné à être fixé à l'extérieur du véhicule automobile.

Ce genre de support 12 est fréquemment utilisé pour des véhicules, par exemple des véhicules tout-terrain, dont la roue de secours doit être facilement accessible et il est donc nécessaire que l'écrou 14 de fixation de la roue 10 sur le support 12 soit agencé du côté du support 12 tourné en direction de la carrosserie du véhicule afin qu'il ne soit pas directement accessible pour éviter que la roue de secours 10 ne soit volée.

Un tel support 12 de roue de secours 10 est généralement monté mobile par exemple sur une porte arrière (non représentée) du véhicule.

Le support 12 étant mobile, il est possible de le dégager de la carrosserie du véhicule afin de rendre l'écrou 14 accessible au conducteur.

Toutefois, il est possible d'utiliser un tel écrou 14 à serrage rapide quelle que soit l'implantation de la roue de secours 10 dans le véhicule, et par exemple dans le cas où la roue 10 est fixée dans un logement agencé à l'intérieur du véhicule, auquel cas la tige filetée 16 est solidaire du support 12 et l'écrou 14 est destiné à venir en appui, directement ou indirectement, contre la roue 10.

Dans l'exemple de réalisation représenté sur la figure 1, la roue 10 comporte une jante 18 qui est centrée sur le support 12 et la roue 10 est fixée sur le support 12 par la tige filetée 16 qui comporte un flasque d'appui 20 qui prend appui sur une face externe 22 de la jante 18.

L'écrou à serrage rapide 14 prend appui contre une face interne 24 du support 12 et il est vissé à l'extrémité libre de la tige filetée 16 de manière à serrer une face interne 26 de la jante 18 contre une face externe 28 du support de roue 12.

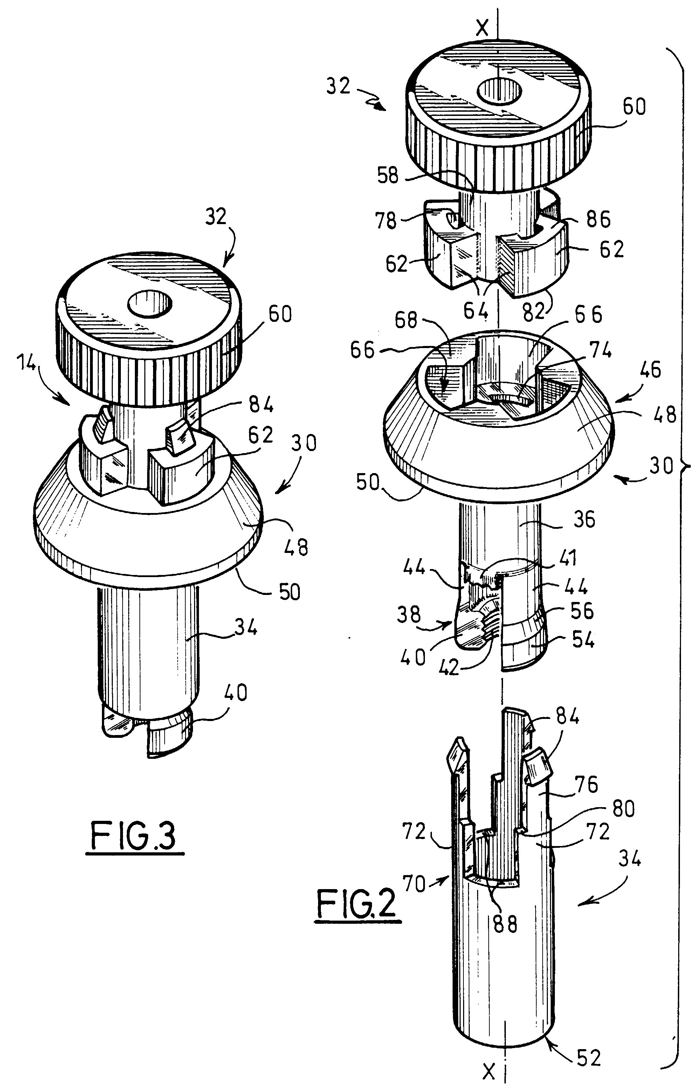

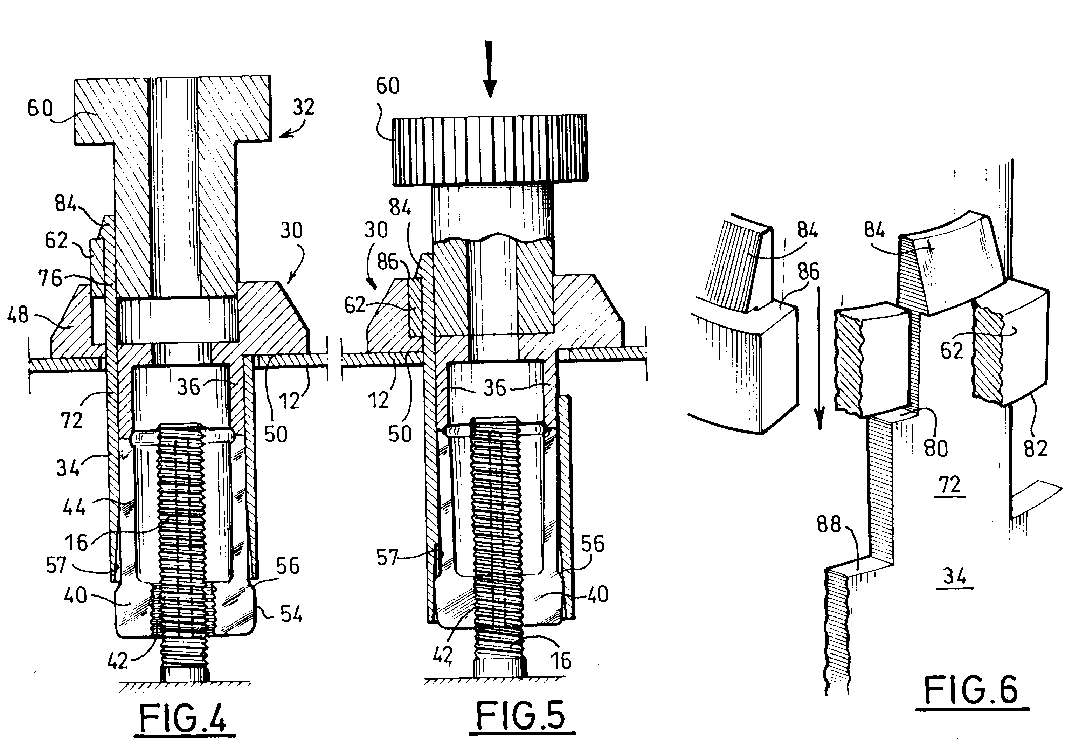

On a représenté sur les figures 2 à 6 un premier mode de réalisation de l'invention.

Selon ce premier mode de réalisation, l'écrou à serrage rapide 14 comporte trois éléments constitutifs qui sont un corps d'écrou 30, une couronne d'entraînement 32 et un fourreau tubulaire 34. Le corps d'écrou 30 comporte un tube d'écrou 36 sensiblement cylindrique dont l'extrémité axiale inférieure 38 porte une bague fendue 40.

La bague fendue 40 comporte une surface cylindrique interne 42 taraudée dont le diamètre est sensiblement inférieur au diamètre interne du tube d'écrou 36.

La bague fendue 40 est plus précisément composée de quatre portions séparées par des fentes axiales 41, et dont chacune est reliée à l'extrémité axiale inférieure 38 du tube d'écrou 36 par une languette axiale 44.

A l'état libre, les portions de la bague fendue 40 sont positionnées de telle sorte que la surface cylindrique interne taraudée 42 de la bague 40 soit d'un diamètre de sommet de filet supérieur au diamètre nominal de la tige filetée 16 sur laquelle elle est destinée à être montée.

Le corps d'écrou 30 comporte à son extrémité axiale supérieure 46 un collet radial 48 dont une face inférieure 50 forme une surface d'appui de l'écrou 14 contre la face interne 24 du support de roue 12.

Le fourreau tubulaire 34 est destiné à être monté autour du tube d'écrou 36 sur lequel il est susceptible de coulisser axialement entre une position retirée de déverrouillage et une position engagée de verrouillage dans laquelle l'extrémité inférieure 52 du fourreau 34 coiffe la bague fendue 40 du corps d'écrou 30.

Le diamètre interne du fourreau tubulaire 34 est sensiblement égal au diamètre externe du tube d'écrou 36. Au contraire, la bague 40 comporte une surface cylindrique externe 54 de diamètre supérieur au diamètre externe du tube 36, et une surface externe conique 56 qui assure la continuité entre le tube 36 et la bague 40.

De la sorte, lorsque le fourreau 34 est déplacé axialement de sa position retirée de déverrouillage vers sa position engagée de verrouillage, l'extrémité inférieure 52 du fourreau prend appui sur la surface externe conique 56 de la bague 40 puis sur la surface cylindrique 54 de la bague 40 de manière à provoquer un serrage radial concentrique des portions constitutives de la bague 40 de manière à ce que le taraudage de la surface cylindrique interne 42 de la bague 40 coopère avec le filetage de la tige filetée 16.

La déformation de la bague 40 est rendue possible par la souplesse relative des languettes 44 de liaison de chacune des portions de la bague 40 à l'extrémité inférieure 38 du tube d'écrou 36.

Afin d'obtenir un effet de serrage de la bague 40 plus progressif et nécessitant un effort axial moindre sur le fourreau 34, l'extrémité axiale inférieure 52 de ce dernier comporte une surface interne 57 légèrement conique, évasée vers le bas, qui coopère avec la surface externe conique 56 de la bague 40 pour provoquer le serrage de celle-ci.

La couronne d'entraînement 32 assure aussi bien l'entraînement en rotation du corps d'écrou 30 que le déplacement axial du fourreau tubulaire 34.

A cet effet, la couronne d'entraînement 32 comporte un manchon tubulaire 58 dont le diamètre interne est suffisant pour permettre le passage de la tige filetée 16.

Le manchon tubulaire 58 comporte à son extrémité axiale supérieure une poignée de manoeuvre 60 destinée à une manoeuvre manuelle de la couronne d'entraînement 32 mais il est possible de remplacer la poignée de manoeuvre 60, par exemple par une tête hexagonale en vue de l'entraînement de la couronne 32 à l'aide d'une clé.

Le manchon tubulaire 58 comporte à son extrémité axiale inférieure trois ergots 62 qui s'étendent radialement et qui sont répartis angulairement à 120°.

Les ergots 62 sont en forme de segment annulaire et leurs faces latérales 64 sont parallèles à l'axe X-X de l'écrou 14. Les ergots 62 sont destinés à être reçus dans des logements 66 de forme correspondante formés dans une face supérieure 68 du collet radial 48 du corps d'écrou 30.

Grâce à leurs faces latérales 64 parallèles à l'axe X-X, les ergots 62 sont susceptibles de coulisser axialement dans les logements 66, mais les ergots 62 et les logements 66 coopèrent pour solidariser la couronne d'entraînement 32 et le corps d'écrou 30 en rotation autour de leur axe commun X-X.

Ainsi, lorsque le fourreau tubulaire 34 est en position engagée de verrouillage, et que le taraudage de la bague 40 est engagé sur la tige filetée 16, l'écrou 14 est susceptible d'être vissé et dévissé le long de la tige filetée 16 lorsque la couronne d'entraînement 32 est manoeuvrée en rotation autour de l'axe X-X.

La couronne d'entraînement 32 permet également de commander les déplacements axiaux du fourreau tubulaire 34.

A cet effet, le fourreau tubulaire 34 comporte à son extrémité axiale supérieure 70 trois doigts axiaux 72 qui traversent axialement le collet radial 48 du corps d'écrou 30 au travers de passages 74 prévus à cet effet.

Les extrémités supérieures libres 76 des doigts axiaux 72 sont reçues dans des orifices 78 qui sont agencés axialement dans les ergots 62 de la couronne d'entraînement 32.

Les doigts axiaux 72 du fourreau tubulaire 34 comportent, sensiblement à mi-hauteur, des décrochements qui limitent la largeur de l'extrémité supérieure libre 76 des doigts 72 et qui délimitent, pour chacun de ces doigts 72, des surfaces de butée 80 destinées à coopérer avec une face inférieure 82 de chacun des ergots 62.

L'extrémité supérieure 76 des doigts 72 est par ailleurs munie de harpons 84 destinés à être comprimés élastiquement lors de l'introduction des doigts 72 dans les orifices 78 des ergots 62 et qui, lorsque les surfaces de butée 80 des doigts 72 sont en appui contre la face inférieure 82 des ergots 62, reprennent élastiquement leur forme initiale afin de coopérer avec une face supérieure 86 de l'ergot 62 correspondant pour interdire le désengagement du doigt 72 par rapport à l'ergot 62.

Ainsi, le fourreau tubulaire 34 est immobilisé axialement par rapport à la couronne d'entraînement 32 et, incidemment, il est également immobilisé en rotation par rapport au corps d'écrou 30.

L'extrémité supérieure 70 du fourreau tubulaire 34 comporte, entre chacun des doigts 72, des surfaces d'appui transversales 88 qui, en position retirée de déverrouillage du fourreau 34, sont en appui contre la surface inférieure d'appui 50 du collet radial 48 du corps d'écrou 30, ce qui permet par conséquent de limiter la course de la couronne d'entraînement 32 par rapport au corps d'écrou 30 et, en prévoyant une longueur axiale adéquate des ergots 62, on interdit ainsi aux ergots 62 de quitter complètement leurs logements 66.

L'écrou 14 ainsi réalisé est composé de trois pièces indépendantes mobiles l'une par rapport à l'autre mais qu'il est impossible de désolidariser accidentellement.

Pour fixer la roue de secours 10 sur son support 12, il suffit alors d'amener la face interne 26 de la jante 18 sensiblement au contact de la face externe 28 du support 12. L'écrou 14, avec son fourreau tubulaire 34 en position retirée de déverrouillage, est alors introduit autour de la tige filetée 16 et est déplacé axialement par simple coulissement jusqu'à ce que la surface inférieure d'appui 50 du collet radial 48 soit sensiblement en appui contre la face interne 24 du support 12.

L'utilisateur exerce alors une poussée axiale sur la couronne d'entraînement 32 qui provoque le déplacement axial du fourreau 34, par rapport au corps d'écrou 30, vers sa position engagée de verrouillage, de manière à faire coopérer les taraudages de la bague fendue 40 et le filetage de la tige filetée 16.

Si l'utilisateur ressent une résistance due au fait que les filets se retrouvent sommet contre sommet, il lui suffit de tourner l'écrou 14 d'une fraction de tour pour les amener en correspondance, ce qui est rendu possible du fait de l'impossibilité pour les ergots 62 de la couronne d'entraînement 32 de sortir de leur logement 66 dans le corps d'écrou 30.

Une fois les filets de la bague 40 et de la tige filetée 16 engagés, il suffit alors de quelques tours d'écrou 14 pour provoquer le serrage adéquat de la roue 10 sur son support 12.

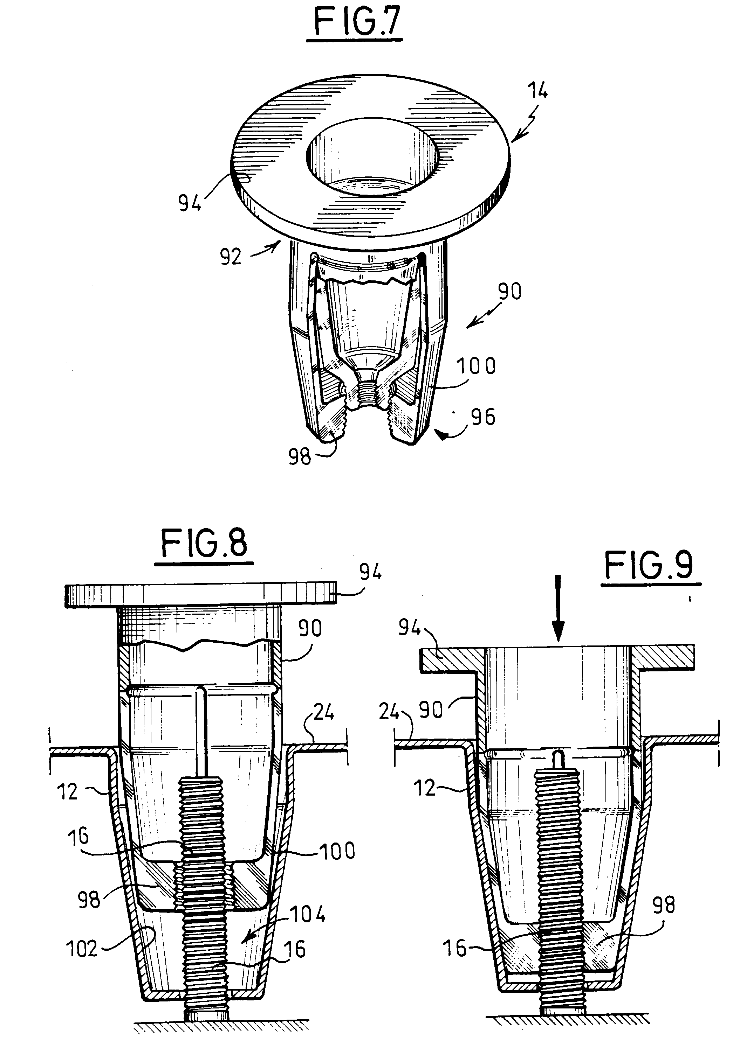

On a représenté sur les figures 7 à 9 un deuxième mode de réalisation de l'invention.

Dans ce mode de réalisation, l'écrou 14 est constitué d'une seule pièce, dans laquelle un corps d'écrou 90 comporte à son extrémité axiale supérieure 92 une poignée de manoeuvre 94 et, à son extrémité inférieure 96, une bague fendue 98 similaire à celle vue dans l'exemple de réalisation précédent.

Dans ce mode de réalisation, le serrage radial de la bague 98 est provoqué par l'objet contre lequel l'écrou 14 est destiné à venir en appui.

Dans l'exemple de réalisation qui est représenté sur les figures 8 et 9, cet objet est le support de roue 12 mais, dans d'autres conceptions de la fixation d'une roue de secours, ce pourrait être la roue de secours elle-même ou une rondelle d'appui interposée entre l'écrou et la roue de secours.

Afin de provoquer le serrage radial de la bague fendue 98, le corps d'écrou 90 et le support de roue 12 comportent chacun une surface conique complémentaire 100, 102.

Ainsi, la surface conique 100 est formée sur la face externe de l'extrémité inférieure 96 du corps d'écrou 90 tandis que la surface conique 102 du support de roue 12 est formée sur la face interne 24 du support de roue 12 dans laquelle elle délimite un logement 104 en creux.

La surface conique 100 du corps d'écrou 90 forme la surface d'appui de l'écrou 14 sur le support de roue 12 et il est donc souhaitable que les surfaces 100, 102 possèdent une conicité sensiblement identique et suffisamment importante pour ne pas entraîner d'effet d'emmanchement de l'écrou 14 dans son logement 104, ce qui rendrait tout serrage ou desserrage très difficile, voire impossible manuellement.

Comme on peut le voir sur les figures 8 et 9, la fixation de la roue 10 sur son support 12 se fait de la manière suivante.

La jante 18 est plaquée contre la face externe 28 du support de roue 12, la tige filetée 16 est mise en place de sorte que son flasque transversal 20 soit en appui contre la face externe 22 de la jante 18 et l'écrou 14 est alors introduit axialement le long de la tige 16 du côté interne du support de roue 12 jusqu'à ce que les surfaces coniques 100, 102 du corps d'écrou 90 et du support de roue 12 entrent en contact.

L'utilisateur doit alors combiner un mouvement de vissage de l'écrou 14 avec une poussée axiale de manière à permettre l'engagement des filets de l'écrou 14 sur ceux de la tige filetée 16.

Une fois l'engagement réalisé, il suffit de tourner l'écrou 14 de quelques tours pour réaliser un serrage axial de la roue 10 sur son support 12.

## Revendications

1. Écrou à serrage rapide, notamment pour la fixation d'une roue de secours (10) de véhicule automobile, du type dans lequel l'écrou (14) comporte une bague fendue (40) déformable qui est munie sur une face cylindrique interne (42) d'un taraudage, et qui, à l'état libre, est d'un diamètre supérieur au diamètre d'une tige filetée (16), et du type dans lequel la bague fendue (40) comporte une surface externe conique (56) destinée à coopérer avec une surface de commande (57) pour provoquer le serrage radial de la bague (40),
caractérisé en ce que la bague fendue (40) est agencée à l'extrémité axiale inférieure (38) d'un tube d'écrou (36) autour duquel est susceptible de coulisser axialement un fourreau tubulaire (34) dont l'extrémité axiale inférieure (52) porte la surface de commande (57), et en ce que le fourreau (34) est susceptible de se déplacer entre une position retirée de déverrouillage dans laquelle la bague fendue (40) est libre et une position engagée de verrouillage dans laquelle la bague fendue (40) est reçue à l'intérieur de l'extrémité inférieure (52) du fourreau (34) et dans laquelle la bague (40) est resserrée sur la tige filetée (16).

2. Écrou selon la revendication 1, caractérisé en ce que l'écrou (14) comporte une couronne d'entraînement (32) en rotation du tube d'écrou (36) qui est montée mobile axialement à l'extrémité supérieure (46) du tube (36) et en ce que la couronne d'entraînement (32) commande les déplacement axiaux du fourreau tubulaire (34).

3. Écrou selon la revendication 2, caractérisé en ce que le tube d'écrou (36) comporte à son extrémité axiale supérieure (46) un collet radial (48) dont une surface radiale inférieure (50) forme une surface d'appui de l'écrou (14).

4. Écrou selon la revendication 3, caractérisé en ce que le collet radial (48) du tube d'écrou (36) comporte dans une face supérieure (68) une série de logements (66) agencés radialement, répartis angulairement de manière régulière, et qui guident axialement des ergots (62) de forme complémentaire formés sur la couronne d'entraînement (32), et en ce que les ergots (62) et les logements (66) coopèrent pour l'accouplement en rotation du'tube d'écrou (36) et de la couronne d'entraînement (32).

5. Écrou selon la revendication 4, caractérisé en ce que le fourreau tubulaire (34) comporte, à une extrémité axiale supérieure (70), des doigts axiaux (72) qui traversent librement le collet radial (48) du tube d'écrou (36) par des passages axiaux (74) et qui sont fixés par emboîtement élastique dans la couronne d'entraînement (32) afin d'assurer l'accouplement axial du fourreau (34) et de la couronne (32).

6. Écrou selon la revendication 5, caractérisé en ce que les passages axiaux (74) du collet radial (48) du tube d'écrou (36) débouchent dans les logements (66) de la face supérieure (68) et en ce que les doigts radiaux (72) sont emboîtés élastiquement dans des orifices (78) formés dans les ergots (62) de la couronne d'entraînement (62).
